# EUROPEAN PATENT APPLICATION

(11) **EP 3 228 892 A1**
(43) Date of publication of application: **11.10.2017**
(21) Application number: 15865839.3
(22) Date of filing: 04.11.2015
(51) Int. Cl.: F16D 3/2245, F16D 3/20

(54) **STATIONARY CONSTANT VELOCITY UNIVERSAL JOINT**

(30) Priority: 02.12.2014 JP 2014243818
(71) Applicant: NTN Corporation, Osaka-shi, Osaka 550-0003 (JP)
(72) Inventor: KATO Yuji, Iwata-shi Shizuoka 438-8510 (JP)
(74) Representative: Grünecker Patent- und Rechtsanwälte PartG mbB
(86) International application number: PCT/JP2015/081063
(87) International publication number: WO 2016/088501

(57) **Abstract**

A protrusion shaft portion is provided on an end surface of a shaft on a joint fitting side, and a recess into which the protrusion shaft portion is fitted is formed in an inner surface of a bottom wall of the mouth section of the outer joint member. The recess allows angular displacement of the shaft to a predetermined operating angle, and the protrusion shaft portion is brought into contact with a wall surface of the recess at the predetermined operating angle so that angular displacement exceeding the predetermined operating angle is regulated. Allowable angular displacement in the recess is within a range of preventing the shaft from being brought into contact with an opening portion of the mouth section.

## Description

### Technical Field

The present invention relates to a fixed type constant velocity universal joint.

### Background Art

As a fixed type constant velocity universal joint, there have been known fixed type constant velocity universal joints of a bar field type (BJ), an undercut-free type (UJ), and the like.

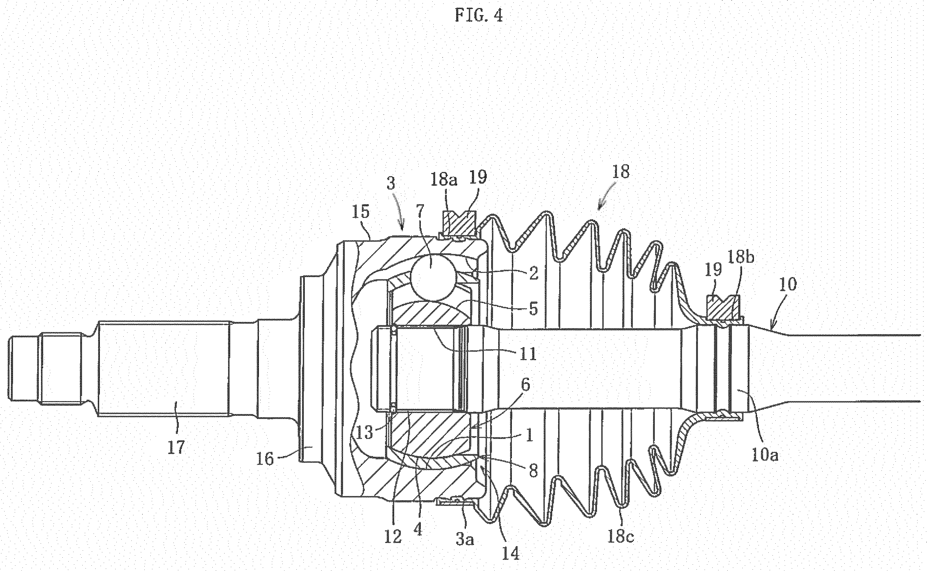

As illustrated in FIG. 4, the fixed type constant velocity universal joint includes an outer joint member 3, an inner joint member 6, a plurality of balls 7, and a cage 8. The outer joint member 3 has a plurality of track grooves 2 formed in a radially inner surface 1 at equal intervals in a circumferential direction and along an axial direction. The inner joint member 6 has a plurality of track grooves 5 formed in a radially outer surface 4 at equal intervals in a circumferential direction and along the axial direction to be paired with the track grooves 2 of the outer joint member 3. The plurality of balls 7 are interposed between the track grooves 2 of the outer joint member 3 and the track grooves 5 of the inner joint member 6 and configured to transmit torque. The cage 8 is interposed between the radially inner surface 1 of the outer joint member 3 and the radially outer surface 4 of the inner joint member 6 and configured to retain the balls 7.

Further, a female spline 11 is formed in a radially inner surface of a shaft hole of the inner joint member 6, and a male spline 12 is formed in an end portion of a shaft 10 to be fitted into the shaft hole of the inner joint member 6. Thus, when the end portion of the shaft 10 is fitted into the shaft hole of the inner joint member 6, the female spline 11 of the inner joint member 6 and the male spline 12 of the shaft 10 are fitted so that torque can be transmitted. A stop ring 13 is mounted to the end portion of the shaft 10. With this, the shaft 10 is prevented from being coming off. The outer joint member 3 includes a mouth section 15 having the plurality of track grooves 2 formed in the radially inner surface 1 and a stem section (shaft section) 17 projecting from a bottom wall 16 of the mouth section 15.

Further, a joint opening portion is sealed with a boot 18. The boot 18 includes a large-diameter portion 18a, a small-diameter portion 18b, and a bellows portion 18c connecting the large-diameter portion 18a and the small-diameter portion 18b to each other. In this case, the large-diameter portion 18a is externally fitted to a boot mounting portion 3a which is formed on an opening portion side in a radially outer surface of a mouth section of the outer joint member 3, and a boot band 19 fastens the large-diameter portion 18a. The small-diameter portion 18b is externally fitted to a boot mounting portion 10a of the shaft 10, and a boot band 19 fastens the small-diameter portion 18b.

In such a related-art fixed type constant velocity universal joint, angle regulation is performed through contact between an opening portion 14 of the mouth section of the outer joint member and the shaft 10 at a maximum allowable angle. However, when the opening portion 14 of the mouth section and the shaft 10 are brought into contact with each other in such a manner, there may occur biting on the boot 18, dropping of the balls, or the like. Further, in order to secure the allowable angle, it is necessary to reduce a shaft diameter of at least a portion to be brought into contact with the opening portion 14 of the mouth section. To achieve the reduction in shaft diameter, it is necessary to reduce a blank diameter of the shaft 10 through turning or the like, which may result in degradation of productivity. Further, the shaft small-diameter portion constructs a weakest portion.

Thus, in related arts, for the purpose of angle regulation, an angle regulation ring is added between a shaft and an inner ring to prevent addition of an excessively large angle before assembly to a vehicle (Patent Literature 1). Further, there has been proposed a universal joint capable of maintaining a constant joint angle (Patent Literature 2).

### Citation List

### Patent Literature

Patent Literature 1: JP 2002-195286 A
Patent Literature 2: JP 07-174158 A

### Summary of Invention

### Technical Problem

According to Patent Literature 1 described above, it is necessary to mount the angle regulation ring. As a result, the number of components may increase, and an assembly operation becomes more complicated. Further, the angle regulation is performed with the angle regulation ring. Thus, there is a fear in that the angle regulation ring is not stabilized in strength for use as a component.

According to Patent Literature 2 described above, an immovable member having a spherical shape is provided, and the immovable member is brought into engagement with an engagement pin portion of an input-side yoke and an engagement pin portion of an output-side yoke at an angle regulation portion to maintain a constant joint angle. Therefore, the disclosed structure is not configured to allow displacement to a certain operating angle and regulate displacement exceeding the operating angle in the fixed type constant velocity universal joint.

In view of the above, the present invention provides a fixed type constant velocity universal joint capable of regulating a maximum operating angle while allowing free angular displacement to the regulated operating angle, and capable of preventing biting on a boot mounted to an outer joint member and preventing dropping of balls being torque transmission members.

### Solution to Problem

According to one embodiment of the present invention, there is provided a fixed type constant velocity universal joint, comprising: an outer joint member having a plurality of track grooves formed in a radially inner surface of the outer joint member so as to extend in an axial direction of the outer joint member; an inner joint member having a plurality of track grooves formed in a radially outer surface of the inner joint member so as to extend in an axial direction of the inner joint member; a plurality of balls interposed between the track grooves of the outer joint member and the track grooves of the inner joint member and configured to transmit torque; a cage interposed between the radially inner surface of the outer joint member and the radially outer surface of the inner joint member and configured to retain the plurality of balls; and a shaft fitted into a shaft hole of the inner joint member, wherein the outer joint member has a mouth section configured to receive an internal component which is constructed by assembling the plurality of balls and the cage to the inner joint member, wherein a protrusion shaft portion is provided on an end surface of the shaft on a joint fitting side, and a recess into which the protrusion shaft portion is fitted is formed in an inner surface of a bottom wall of the mouth section of the outer joint member, wherein the recess allows angular displacement of the shaft to a predetermined operating angle, and the protrusion shaft portion is brought into contact with a wall surface of the recess at the predetermined operating angle so that angular displacement exceeding the predetermined operating angle is regulated, and wherein allowable angular displacement in the recess is within a range of preventing the shaft from being brought into contact with an opening portion of the mouth section.

With the fixed type constant velocity universal joint according to the present invention, the recess formed in the inner surface of the bottom wall of the mouth section of the outer joint member allows angular displacement of the shaft to the predetermined operating angle, thereby being capable of preventing angular displacement exceeding the predetermined operating angle. The allowable angular displacement is within the range of preventing the shaft from being brought into contact with the opening portion of the mouth section. Therefore, biting on the boot mounted to the outer joint member of the fixed type constant velocity universal joint can be prevented.

Further, the recess formed in the inner surface of the bottom wall of the mouth section of the outer joint member and the protrusion shaft portion provided on the end surface of the shaft on the joint fitting side can construct an angle regulation mechanism.

It is preferred that the allowable angular displacement in the recess be set to about 20°. Incidentally, in a fixed type constant velocity universal joint to be applied to a constant velocity universal joint for a rear side, unlike a constant velocity universal joint for a front side, there is no need to secure a steering angle. Thus, an allowable angle of about 20° is often practical. Therefore, even when the allowable angular displacement in the recess is set to about 20°, the fixed type constant velocity universal joint to be applied to the constant velocity universal joint for a rear side can be constructed. Herein, the angle of about 20° corresponds to an angle equal to 20° and angles around 20°. The angle less than 20° is 10°, and the angle more than 20° is 30°. That is, the angle of about 20° corresponds to an angle equal to or more than 10° and equal to or less than 30°.

It is preferred that the shaft be fitted into the shaft hole of the inner joint member after an operation of mounting the internal component to the mouth section. With such a configuration, at the time of performing the operation of mounting the internal component to the mouth section, the shaft is not fitted into the inner joint member. Thus, the angle regulation is not performed.

### Advantageous Effects of Invention

According to the present invention, the allowable angular displacement is within the range of preventing the shaft from being brought into contact with the opening portion of the mouth section. Therefore, the biting on the boot mounted to the outer joint member of the fixed type constant velocity universal joint and the dropping of the balls being torque transmission members can be prevented.

The biting on the boot can be prevented. Thus, damages on the boot can be avoided when the operating angle is taken. Further, there is no need to form the boot into a shape of avoiding the opening portion of the outer ring mouth section and the shaft contact portion to prevent damages. Thus, compact design can be achieved. Further, there is no need to form the shaft to have a small diameter to prevent the contact between the opening portion of the mouth section and the shaft. Conversely, the shaft can be formed to have a large diameter. Thus, the strength of the shaft can be improved. As described above, the shaft can have a large diameter. Thus, when the shaft is produced, the shaft diameter is unchanged from the blank diameter, and turning or the like can be omitted, thereby contributing to productivity and cost reduction.

Further, the opening portion of the mouth section and the shaft are prevented from being brought into contact with each other. Thus, there is no need to upsize the outer joint member to achieve the configuration of preventing the contact. Conversely, the outer joint member can be downsized to reduce the weight. The angle regulation mechanism has a simple configuration, and the angle regulation can be performed through contact of the protrusion shaft portion with the recess. Thus, the angle regulation can be performed in a stable manner.

The recess can be formed through turning, forging, or the like. Thus, there are advantages that the size, shape, and the like of the recess can be suitably changed, and that the regulation angle can be suitably changed through such changes in size, shape, and the like of the recess. When the allowable angular displacement in the recess is set to about 20°, the reliability in prevention of the dropping of the balls is improved, and the allowable angular displacement is applicable to the fixed type constant velocity universal joint to be applied to the constant velocity universal joint for a rear side.

When the shaft is to be fitted into the shaft hole of the inner joint member after an operation of mounting an internal component to the mouth section, the angle regulation is not performed at the time of the operation of mounting the internal component to the mouth section. Therefore, the operation of mounting the internal component to the mouth section can be reliably performed through the related-art method.

### Brief Description of Drawings

FIG. 1 is a sectional view of a fixed type constant velocity universal joint according to an embodiment of the present invention.
FIG. 2 is an enlarged view for illustrating relevant parts of a shaft.
FIG. 3 is a sectional view for illustrating a state in which the fixed type constant velocity universal joint illustrated in FIG. 1 takes an operating angle.
FIG. 4 is a sectional view of a related-art fixed type constant velocity universal joint.

### Description of Embodiments

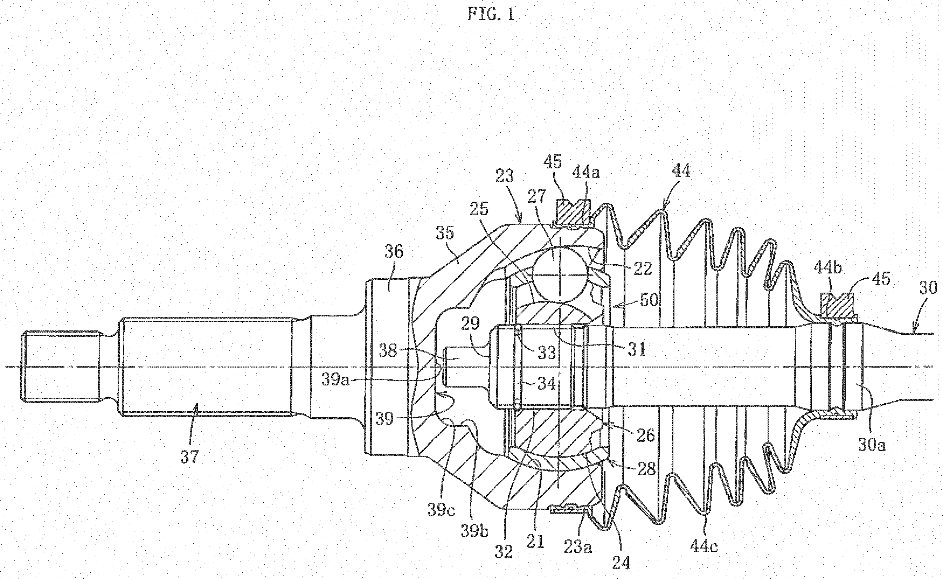

Now, an embodiment of the present invention is described with reference to FIG. 1 to FIG. 3. The fixed type constant velocity universal joint comprises an outer joint member 23, an inner joint member 26, a plurality of balls 27, and a cage 28. The outer joint member 23 has a plurality of track grooves 22 formed in a radially inner surface 21 at equal intervals in a circumferential direction and along an axial direction. The inner joint member 26 has a plurality of track grooves 25 formed in a radially outer surface 24 at equal intervals in a circumferential direction and along an axial direction to be paired with the track grooves 22 of the outer joint member 23. The plurality of balls 27 are interposed between the track grooves 22 of the outer joint member 23 and the track grooves 25 of the inner joint member 26 and configured to transmit torque. The cage 28 is interposed between the radially inner surface 21 of the outer joint member 23 and the radially outer surface 24 of the inner joint member 26 and configured to retain the balls 27.

Further, a female spline 31 is formed in a radially inner surface of a shaft hole of the inner joint member 26, and a male spline 32 is formed in an end portion of a shaft 30 to be fitted into the shaft hole of the inner joint member 26. Thus, when the end portion of the shaft 30 is fitted into the shaft hole of the inner joint member 26, the female spline 31 of the inner joint member 26 and the male spline 32 of the shaft 30 are brought into mesh with each other so that torque can be transmitted.

The outer joint member 23 comprises a mouth section 35 having the plurality of track grooves 22 formed in the radially inner surface 21 and a stem section (shaft section) 37 projecting from a bottom wall 36 of the mouth section 35. Further, a recess 39 is formed in an inner surface of the bottom wall 36 of the mouth section 35 of the outer joint member. The recess 39 is a flat and circular recess having a bottom surface 39a, which has a circular shape, and a wall surface 39b, which is provided at an outer peripheral edge of the bottom surface 39a and extends along a circumferential direction. A rounded corner portion 39c is formed between the bottom surface 39a and the wall surface 39b.

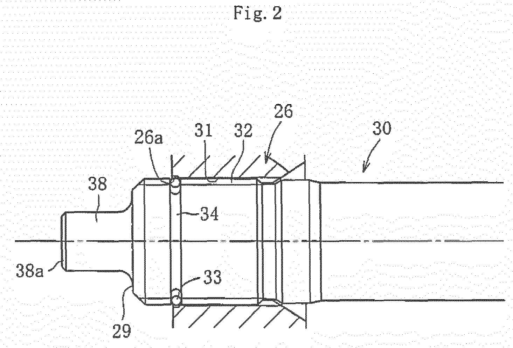

Further, as illustrated in FIG. 2, a protrusion shaft portion 38 is formed at an end surface 29 of the shaft 30 on a joint fitting side. The protrusion shaft portion 38 extends along a shaft axial center and has a diameter smaller than that of the male spline 32 of the shaft 30. A peripheral recess groove 34 is formed on a joint far side of the male spline 32, and a stop ring 33 is fitted to the peripheral recess groove 34. The stop ring 33 is engaged with a cutout portion 26a formed on a joint far side of the shaft hole of the inner joint member 26. With this, separation of the shaft 30 is regulated. A chamfered portion 38a is formed in an outer peripheral portion of a distal end surface of the protrusion shaft portion 38.

Further, as illustrated in FIG. 1, the joint opening portion is sealed with a boot 44. The boot 44 comprises a large-diameter portion 44a, a small-diameter portion 44b, and a bellows portion 44c connecting the large-diameter portion 44a and the small-diameter portion 44b to each other. In this case, the large-diameter portion 44a is externally fitted to a boot mounting portion 23a which is formed on an opening portion side in a radially outer surface of the mouth section 35 of the outer joint member 23, and a boot band 45 fastens the large-diameter portion 44a. The small-diameter portion 44b is externally fitted to a boot mounting portion 30a of the shaft 30, and a boot band 45 fastens the small-diameter portion 44b.

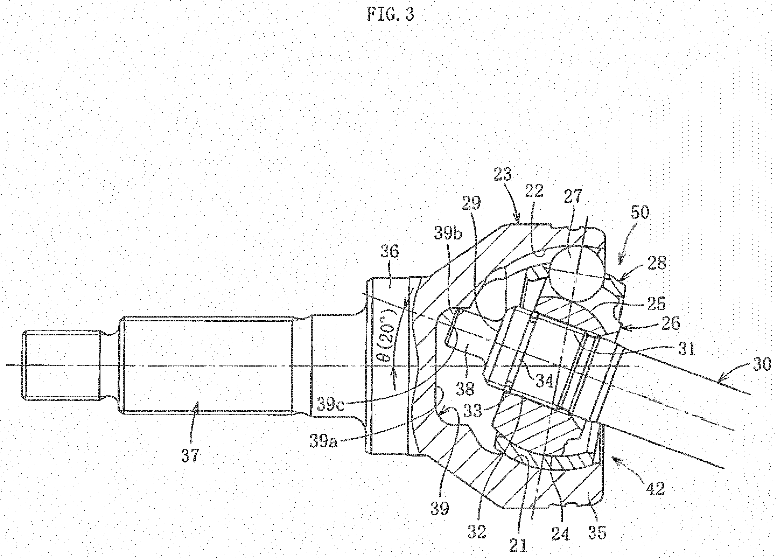

In the fixed type constant velocity universal joint having the above-mentioned configuration, as illustrated in FIG. 3, when the shaft 30 is inclined with respect to an axial center of the outer joint member 23 so that an operating angle θ is taken, the protrusion shaft portion 38 is brought into contact with the wall surface 39b of the recess 39. With this, angular displacement exceeding the operating angle θ is regulated. The operating angle θ in this case is 20°. That is, the recess 39 allows angular displacement of the shaft to a predetermined operating angle, which is 20° in this embodiment, and the protrusion shaft portion is brought into contact with the wall surface 39b of the recess 39 at the operating angle so that the angular displacement exceeding the predetermined operating angle is regulated. In this case, the predetermined operating angle is not limited to 20° and may be about 20°. The angle of about 20° corresponds to 20° and angles around 20°. The angle less than 20° is 10°, and the angle more than 20° is 30°. That is, the angle of about 20° corresponds to an angle equal to or more than 10° and equal to or less than 30°. In FIG. 3, the boot 44 is omitted.

Further, under a state in which the maximum operating angle is taken, the shaft 30 is not held in contact with the opening portion of the mouth section 35. That is, the allowable angular displacement in the recess 39 is within a range of preventing the shaft 30 from being brought into contact with the mouth section 35, specifically, the opening portion (mouth inlet portion 42) of the mouth section 35.

Incidentally, in the above-mentioned fixed type constant velocity universal joint, first, an internal component 50 which is constructed by an assembly of the inner joint member 26, the balls 27, and the cage 28 is mounted to the mouth section 35 of the outer joint member 23. After that, an end portion of the shaft 30 is fitted into the shaft hole of the inner joint member 26, and the male spline 32 on the shaft 30 and the female spline 31 in the shaft hole of the inner joint member 26 are brought into mesh with each other.

The shaft 30 is to be fitted under a state in which the stop ring 33 is fitted to the peripheral recess groove 34 formed in the end portion of the shaft 30. In this case, the stop ring 33 is fitted to the peripheral recess groove 34 with play in a free state. When the shaft 30 is fitted into the shaft hole of the inner joint member 26, the stop ring 33 is reduced in diameter by the female spline 31 in the shaft hole of the inner joint member 26. Under a state in which the shaft 30 is completely fitted, the stop ring 33 is increased in diameter from the state of being reduced in diameter, and is engaged with the peripheral cutout portion 26a (see FIG. 2) on the joint far side of the shaft hole of the inner joint member 26. With this, the shaft 30 and the inner joint member 26 are connected to each other.

As described above, in the above-mentioned fixed type constant velocity universal joint, the allowable angular displacement is within the range of preventing the shaft 30 from being brought into contact with the opening portion of the mouth section 35. Therefore, biting on the boot 44 mounted to the outer joint member 23 of the fixed type constant velocity universal joint and dropping of the balls 27 being torque transmission members can be prevented.

The biting on the boot 44 can be prevented. Thus, damages on the boot 44 can be avoided when the operating angle is taken. Further, there is no need to form the boot 44 into a shape of avoiding the opening portion of the outer ring mouth section and the shaft contact portion to prevent damages. Thus, compact design can be achieved. Further, there is no need to form the shaft 30 to have a small diameter to prevent the contact between the opening portion of the mouth section 35 and the shaft 30. Conversely, the shaft 30 can be formed to have a large diameter. Thus, the strength of the shaft 30 can be improved. As described above, the shaft 30 can have a large diameter. Thus, when the shaft 30 is produced, the shaft diameter is unchanged from the blank diameter, and turning or the like can be omitted, thereby contributing to productivity and cost reduction.

Further, the opening portion of the mouth section 35 and the shaft 30 are prevented from being brought into contact with each other. Thus, there is no need to upsize the outer joint member 23 to achieve the configuration of preventing the contact. Conversely, the outer joint member 23 can be downsized to reduce the weight. Further, the recess 39 formed in the inner surface of the bottom wall 36 of the mouth section 35 of the outer joint member 23 and the protrusion shaft portion 38 provided on the end surface of the shaft 30 on the joint fitting side can construct the angle regulation mechanism. The angle regulation mechanism has a simple structure, and the angle regulation can be performed through contact of the protrusion shaft portion 38 with the recess 39. Thus, the angle regulation can be performed in a stable manner.

When the allowable angular displacement in the recess 39 is set to about 20°, the reliability in prevention of the dropping of the balls is improved, and the allowable angular displacement is applicable to the fixed type constant velocity universal joint to be applied to the constant velocity universal joint for a rear side.

When the shaft 30 is to be fitted into the shaft hole of the inner joint member after an operation of mounting an internal component 50 to the mouth section 35, the angle regulation is not performed at the time of the operation of mounting the internal component 50 to the mouth section 35. Therefore, the operation of mounting the internal component 50 to the mouth section 35 can be reliably performed through the related-art method.

The recess 39 can be formed through turning, forging, or the like. Thus, there are advantages that the size, shape, and the like of the recess 39 can be suitably changed, and that the regulation angle can be suitably changed through such changes in size, shape, and the like of the recess 39.

The embodiment of the present invention is described above. However, the present invention is not limited to the above-mentioned embodiment, and various modifications can be made. In the embodiment, the protrusion shaft portion 38 has a diameter which is smaller than that of the male spline 32 of the shaft 30. However, the protrusion shaft portion 38 may have a diameter which is equal to or larger than that of the main body portion 40. In short, it is only necessary that the recess 39 allow the angular displacement of the shaft 30 to the operating angle of about 20° so that the angular displacement exceeding the operating angle of about 20° can be regulated through contact of the protrusion shaft portion 38 with the wall surface 39b of the recess 39 at the operating angle of about 20°.

### Industrial Applicability

The constant velocity universal joint may be a Rzeppa type constant velocity universal joint, which has track grooves each having a groove bottom formed of an arc portion with a single arc, or an undercut-free type constant velocity universal joint, which has track grooves each having a groove bottom formed of an arc portion and a straight portion.

### Reference Signs List

- 21: radially inner surface
- 22: track groove
- 23: outer joint member
- 24: radially outer surface
- 25: track groove
- 26: inner joint member
- 27: ball
- 28: cage
- 30: shaft
- 35: mouth section
- 36: bottom wall
- 38: protrusion shaft portion
- 39: recess
- 50: internal component

## Claims

1. A fixed type constant velocity universal joint, comprising:
an outer joint member having a plurality of track grooves formed in a radially inner surface of the outer joint member so as to extend in an axial direction of the outer joint member;
an inner joint member having a plurality of track grooves formed in a radially outer surface of the inner joint member so as to extend in an axial direction of the inner joint member;
a plurality of balls interposed between the track grooves of the outer joint member and the track grooves of the inner joint member and configured to transmit torque;
a cage interposed between the radially inner surface of the outer joint member and the radially outer surface of the inner joint member and configured to retain the plurality of balls; and
a shaft fitted into a shaft hole of the inner joint member,
wherein the outer joint member has a mouth section configured to receive an internal component which is constructed by assembling the plurality of balls and the cage to the inner joint member,
wherein a protrusion shaft portion is provided on an end surface of the shaft on a joint fitting side, and a recess into which the protrusion shaft portion is fitted is formed in an inner surface of a bottom wall of the mouth section of the outer joint member,
wherein the recess allows angular displacement of the shaft to a predetermined operating angle, and the protrusion shaft portion is brought into contact with a wall surface of the recess at the predetermined operating angle so that angular displacement exceeding the predetermined operating angle is regulated, and
wherein allowable angular displacement in the recess is within a range of preventing the shaft from being brought into contact with an opening portion of the mouth section.

2. The fixed type constant velocity universal joint according to claim 1, wherein the allowable angular displacement in the recess is set to about 20°.

3. The fixed type constant velocity universal joint according to claim 1 or 2, wherein the shaft is fitted into the shaft hole of the inner joint member after an operation of mounting the internal component to the mouth section.
